# EUROPEAN PATENT APPLICATION

(11) **EP 3 984 736 A1**
(43) Date of publication of application: **20.04.2022**
(21) Application number: 21202759.3
(22) Date of filing: 14.10.2021
(51) Int. Cl.: B32B 3/08, B32B 3/04, B32B 3/06, B32B 3/30, B32B 3/28, E04B 1/80, F16L 59/00

(54) **A THERMAL INSULATION PANEL AND RELATED MANUFACTURING METHOD**

(30) Priority: 16.10.2020 IT 202000024503
(71) Applicant: Isolpack S.p.A., 10128 Torino (IT)
(72) Inventor: CERIA, Edilberto Antonio, I-10128 Torino (IT)
(74) Representative: De Bonis, Paolo

(57) **Abstract**

There is described a thermal insulation panel comprising a pair of outer walls (2, 3), a pair of containment sheets (4, 5) arranged between the outer walls, and a thermal insulating layer arranged in a thickness compartment delimited by the outer walls and by the containment sheets. At least one of the containment sheets is shaped so as to define a housing seat (S) for a sealing element (7).

## Description

### Field of the Invention

The present invention relates to thermal insulation panels for the construction sector, specifically to thermal insulation panels adapted to form roofings or thermal claddings of civil buildings.

### Related Art and General Technical Problem

Some types of thermal insulation panels for the construction sector include a pair of outer walls, which are spaced from each other by a distance corresponding to the thickness of the panel itself, and between which there are arranged a pair of containment sheets delimiting, together with the outer walls, a thickness compartment which is filled with a heat-insulating material, e.g. a self-expanding foam. The panels are produced with continuous flow processes, wherein two flows of metal sheet material are fed while being mutually spaced by a distance equal to the thickness, and two flows of sheet material are fed between the flows of metal material, defining the containment sheets and the thickness compartment wherein the heat-insulating foam is injected. The panels are then cut to measure from the single plate obtained at the end of the process, so that those panel faces which are not occupied by the outer walls or by the containment sheets leave the heat-insulating foam exposed. The coupling of contiguous panels is achieved thanks to profiles, which are formed at the mutually facing ends of the outer walls and typically are double-ribbed or fork-shaped profiles, which enable a form-fitting coupling between contiguous panels. Such interface is the origin of the technical problem exhibited by the known panels: an imperfect sealing between two coupled panels. As a matter of fact, the thermal insulation panels are manufactured with rather loose coupling tolerances, in order to keep costs low, and when the contiguous panels are joined the interface surfaces establish a contact with a definitely inaccurate fit, therefore creating a thermal bridge to the outdoor environment. In order to address this drawback, the operators who install the panels often resort to manually applying silicone, or a sealing glue, or other similar sealing materials, at the interfaces, which obviously requires additional costs in terms of time and materials. In alternative solutions, the semi-finished plate or the panels, already cut to measure, which exit the manufacturing line are machined by stock removal from the thermal insulating layer, with the purpose of obtaining a profile adapted to achieve a form fitting coupling with a complementary profile of a homologous contiguous panel, which must be coupled with the former one.

Examples of such profiles, which are machined by removing the containment sheet(s), comprise sawtooth, square wave or other geometries adapted to obtain complementary profiles for form fitting.

The problem with such a technical solution is the low reliability thereof: the layer of heat-insulating foam which fills the thickness compartment undergoes contraction and settlement after injection, inevitably modifying the geometry of the machined profile and jeopardizing the effectiveness of such machining. This sometimes leads to using silicone at the building site, and therefore facing all the drawbacks that the former solution involves.

### Object of the Invention

The present invention aims at solving the technical problems mentioned in the foregoing. Specifically, the present invention aims at providing thermal insulation panels having coupling interfaces that ensure an effective sealing action as regards heat transmission, without requiring further machining after manufacturing.

### Summary of the Invention

The object of the invention is achieved thanks to a panel and a method having the features set forth in the Claims that follow, which form an integral part of the technical disclosure provided herein in relation to the invention.

### Brief Description of the Figures

The invention will now be described with reference to the attached figures, provided purely by way of nonlimiting example, and wherein:
- Figure 1 is a perspective view of a thermal insulation panel according to the invention,
- Figure 2 is a detailed view according to arrow II in Figure 1,
- Figure 3 is a detailed view according to arrow III in Figure 1,
- Figure 4 is an enlarged view corresponding to Figure 3,
- Figure 5A and Figure 5B show a coupling sequence of thermal insulation panels according to the invention,
- Figure 6 is a schematic representation of an equipment adapted to be used in the method according to the invention, and
- Figure 6A shows a detail of the equipment in Figure 1.

### Detailed Description

Reference 1 in the Figures generally designates a thermal insulation panel according to the invention.

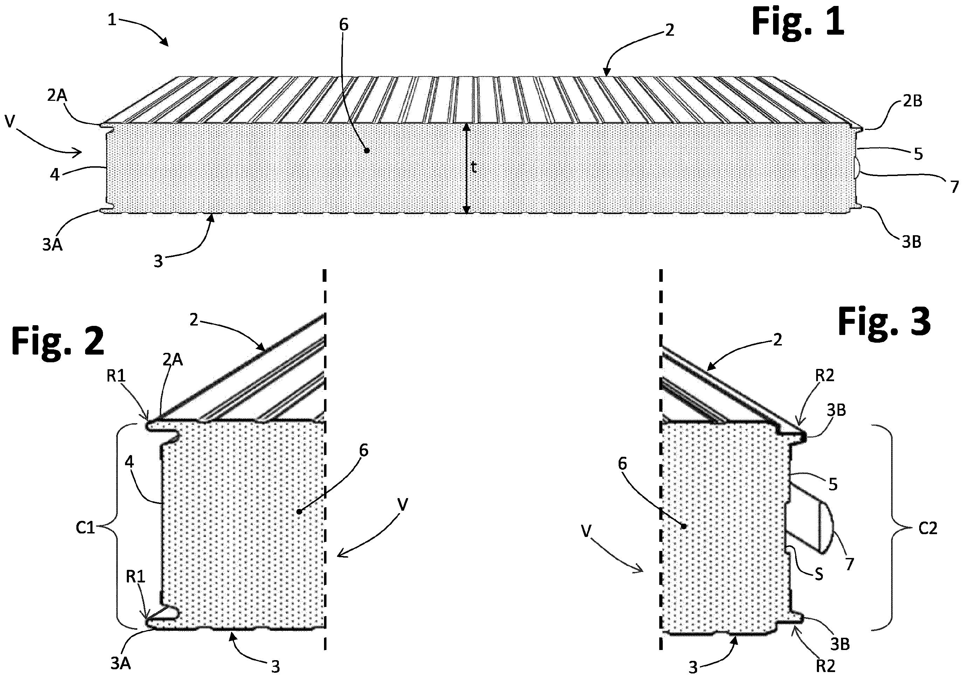

Referring to Figure 1, panel 1 comprises a first outer wall 2 and a second outer wall 3, which are arranged spaced from each other to define a thickness t of said panel therebetween. Thickness t may be constant or, as shown in the Figures, may vary locally due to the corrugated geometry of walls 2, 3.

Panel 1 moreover comprises a first containment sheet 4 and a second containment sheet 5 extending along thickness t between, respectively, a first pair of mutually facing end edges 2A, 3A and a second pair of mutually facing end edges 2B, 3B of said first outer wall (edges 2A, 2B) and second outer wall (edges 3A, 3B). Specifically, the first containment sheet 4 and the second containment sheet 5 are arranged at opposite ends of the thermal insulation panel 1 and delimit, together with the first outer wall 2 and the second outer wall 3, a thickness compartment V of the thermal insulation panel 1.

A thermal insulating layer 6 occupies the thickness compartment V and is arranged between walls 2 and 3 and between containment sheets 4, 5. Consequently, the thermal insulating layer - which has substantially a parallelepiped shape - is surrounded at four faces (the faces being in contact with walls 2, 3 and with sheets 4, 5, in mutually opposite pairs), while at the two remaining faces, in turn mutually opposite, it faces directly outwards.

According to the invention, at least one between the first containment sheet 4 and the second containment sheet 5 is shaped so as to include one or more housing seats S for a respective tubular or cord-shaped sealing element 7. The sealing element 7 is made of an elastomer material, e.g. a hollow rubber gasket, including EPDM or other compounds, which works by abutment. In some embodiments, the gasket has a substantially "D"-shaped hollow section.

In the preferred embodiment shown in the Figures, containment sheet 5 is shaped so as to configure a (single) seat S for a tubular sealing gasket 7, which is obtained e.g. by extrusion. Element 7 is fixed in seat S and extends along the corresponding containment sheet 5, in a position comprised between the pair of mutually facing end edges 2B, 3B. It will be noted that, as will be apparent from the description of the manufacturing method, the shaping of sheet 5 leads to a corresponding shaping of the thermal insulating layer 6 at seat S, the surface of seat S being coated by sheet 5. In other words, the profile impressed to sheet 5 is also impressed into the heat-insulating material which constitutes layer 6, because layer 6 is in direct contact with sheet 5, or else it is assembled with sheet 5 so as to receive the impressed shaping of seat S.

It will be noted, moreover, that the Figures show an embodiment wherein seat S corresponds to a longitudinal groove (assuming, as a longitudinal direction, the direction parallel to walls 2, 3 and to sheets 4, 5, which is the same as the process direction during manufacturing of panel 1) extending without interruption along sheet 5; however, other embodiments are possible wherein seat S may be configured as a regular succession of imprints and/or surface elevations in sheet 5, optionally with a combined extension in the transversal and in the longitudinal direction. The choice depends on the fixation requirements of sealing element 7 and on the type thereof. Sealing element 7 works as a ledge of a window frame onto containment sheet 4.

Moreover, without prejudice to what has been described regarding seat S in sheet 5, a seat S may be provided, in addition or as an alternative, on sheet 4, according to needs.

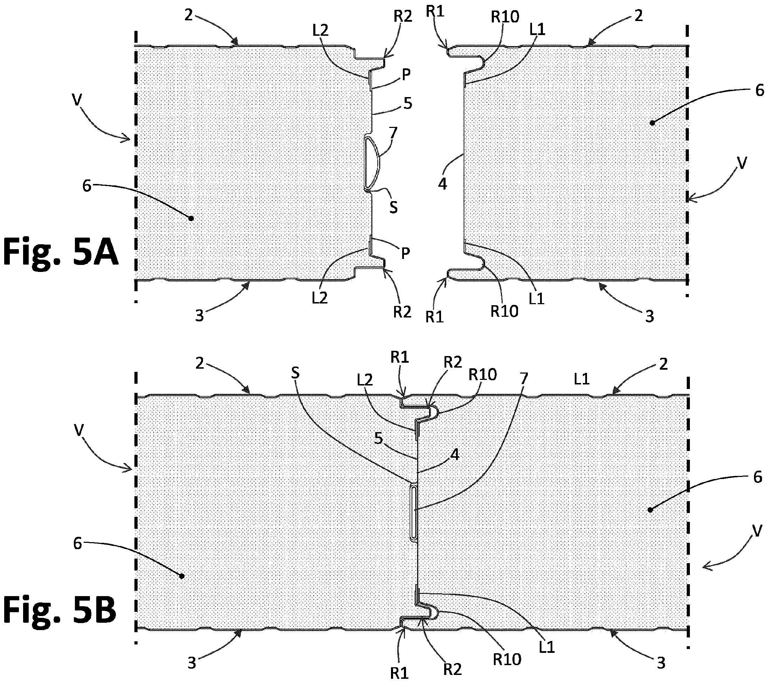

Referring to Figures 2, 3 and 4, the first pair of mutually facing end edges 2A, 3A and the second pair of mutually facing end edges 2B, 3B are shaped in such a way as to define, respectively, a first coupling profile C1 and a second coupling profile C2 which can be mutually coupled, wherein the coupling profile C1 defined by the first pair of mutually facing end edges is configured for coupling shape with the coupling profile C2 defined by the second pair of mutually facing end edges of a homologous thermal insulation panel, as shown in the following Figures 5A, 5B.

The first containment sheet 4 and the second containment sheet 5 are arranged, respectively, within the first coupling profile C1 and the second coupling profile C2 so that, during the coupling of two homologous panels 1, the sheet 4 and the profile C1 of a first panel 1 respectively engage profile C2 and face sheet 5 of a second panel 1. The sealing element 7 is compressed between containment sheets 5 and 4, therefore ensuring, once both panels 1 are coupled, an air-tight seal.

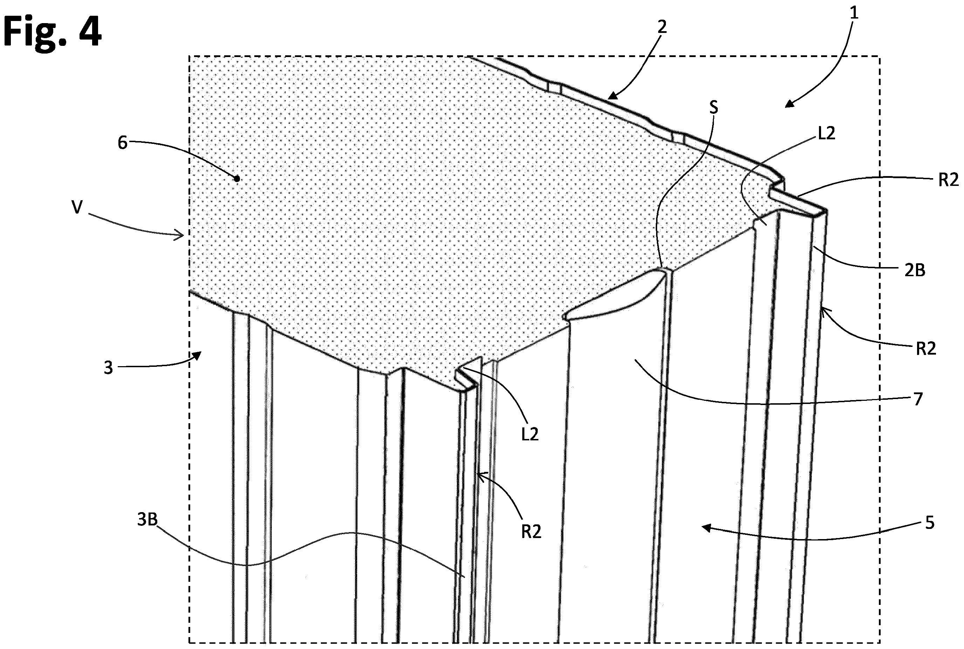

Referring to Figure 4 and Figures 5A, 5B, in the preferred embodiment shown, each coupling profile C1, C2 comprises a pair of ribs R1 (for profile C1), R2 (for profile C2) extending along the respective mutually facing end edges 2A, 3A (ribs R1) and 2B, 3B (ribs R2). If the walls 2 and 3 are made of a metal sheet, as in the preferred embodiment, each rib is preferably obtained by upturning the first outer wall 2 and the second outer wall 3 towards the thickness compartment V, i.e. towards the region comprised between the same walls 2, 3.

Ribs R1 of the first coupling profile C1 comprise a pair of facing surfaces located inside the thickness compartment V and spaced along thickness t by a first distance D, and ribs R2 of the second coupling profile C2 comprise a pair of surfaces facing outwards of said thickness compartment V, and spaced along thickness t by a second distance d, which is equal to or less than (preferably substantially equal to) distance D, so as to enable housing ribs R2 between ribs R1. It will be noted, moreover (Figures 5A, 5B), that profile C1 may advantageously comprise a further pair of ribs R10, which are obtained by upturning once again, this time towards the outside of thickness compartment V, the metal sheet of walls 2, 3 so as to create a pair of grooves for housing the ridges of ribs R2 during the coupling of two contiguous panels 1. Moreover, a further bending of the metal sheet of walls 2, 3 may be envisaged while forming profiles C1, C2, in such a way as to obtain shelves L1, L2 inside profiles C1, C2 and inside ribs R1, R2, respectively, so as to offer an abutting surface to the containment sheets 4, 5 when they are being applied. It is still possible to fill seats R10 with silicone or adhesive sealing material, so as to create a triple water-tight and air-tight barrier.

Panel 1 is manufactured through a continuous flow method which largely resembles conventional methods.

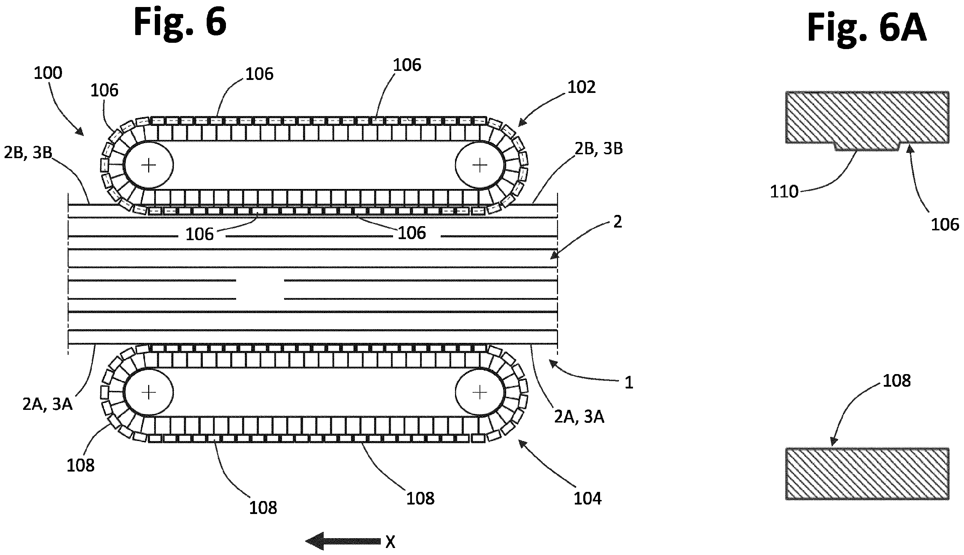

The method comprises feeding a first flow of sheet material and a second flow of sheet material along a main process direction X (see Figure 6) and in a mutually spaced position in the direction transverse to process direction X, wherein the first flow of sheet material provides the first wall 2, and wherein the second flow of sheet material provides the second wall 3.

Said flows of sheet material are processed so as to shape the first pair of mutually facing end edges 2A, 3A and the second pair of mutually facing end edges 2B, 3B in order to define, respectively, the first coupling profile C1 and the second coupling profile C2. The shaping takes place with conventional plastic forming tools, which are used in metal sheet bending lines. This step leads to obtaining ribs R1, R2, optional ribs R10 and optional shelves L1, L2.

While feeding the first and second flow of sheet material, the method envisages feeding a third flow of sheet material and a fourth flow of sheet material, which define the first containment sheet 4 and the second containment sheet 5.

The third flow of sheet material and the fourth flow of sheet material are applied by equipment 100 shown in Figure 6. Specifically, the third flow of sheet material and the fourth flow of sheet material are respectively applied, by a first containment device 102 and by a second containment device 104, between the first pair of mutually facing end edges 2A, 3A (for the third flow - sheet 4) and the second pair of mutually facing end edges 2B, 3B (for the fourth flow - sheet 5). The application is performed so as to impart, to the third and/or to the fourth flow of sheet material (sheet 4 and/or sheet 5), a shape corresponding to the housing seat S by means of the respective containment device.

More specifically, the first and the second containment devices 102, 104 each comprise a track carrying a plurality of cleats 106, 108, which are adapted to exert a containment action on the corresponding flow of sheet material in a direction transverse to the main process direction X. Each cleat is adapted to exert the containment action by following the movement of panel 1 being formed (i.e. the movement of the first to fourth flows of sheet material) along direction X.

The section of the cleats 106, 108 is shown in Figure 6A, from which it may be appreciated how cleats 108 are shaped so as not to exhibit surface elevations or other geometric singularities in the area of application of the third flow of sheet material, which leads to applying the containment sheet 4 in a substantially flat configuration. According to the invention, cleats 106 have a surface elevation 110, configured for imparting, to the fourth flow of sheet material 5 and therefore to sheet 5, the shape of seat S (cleat 106 has a geometry complementary to the shape of seat S). Of course, should the need exist to provide the seat S on both sheets 4 and 5, it would suffice to provide cleats 108 with the same geometry of cleats 106.

During the interaction between equipment 100 and the first to fourth flows of sheet material, the method envisages delivering a heat-insulating material into thickness compartment V (which at this point is defined by the four flows of sheet material of panel 1 being formed), while keeping the application of the first and the second containment device on the third flow of sheet material and the fourth flow of sheet material. This means that the supply of the heat-insulating material takes place at equipment 100. The heat-insulating material is typically a self-expanding foam: during the delivery into thickness compartment V, the expanding action of the foam acts on walls 2, 3 (first and second flows of material), which are adapted to independently exert an action resisting expansion, and on sheets 4, 5 (third and fourth flows of sheet material), which however resist expansion not autonomously, but thanks to the containment action exerted by the containment devices 102, 104 and by the cleats 106, 108. The interaction between the heat-insulating material, which is expanding, and the containment devices 102, 104 tightens the contact between the containment sheets 4, 5 and the cleats 108, 106, therefore defining the shape of the heat-insulating layer 6 and thus obtaining seat S. After delivering the heat-insulating material, the panel is thus ready for applying the sealing element 7 into the housing seat S. Applying the sealing element 7 is performed continuously during manufacturing, by means of adhesivization.

The panels 1 are cut from the continuous plate which is obtained through the method described in the foregoing, in a direction transverse to direction X, so as to yield a comprehensive range of sizes.

The person skilled in the art will appreciate that, through a targeted modification of an already known production method, it is possible to achieve a significant technical advantage, i.e. a finished product which is already equipped with a sealing element or with sealing elements without requiring additional processing at the end of the line or at the building site, and without requiring the addition of sealing compounds during the installation. In comparison with the known solutions, wherein the housing seat for the sealing element is obtained by machining the thermal insulating layer 6, which to this end is exposed by removing containment sheet 4 and/or 5, the provision of seat S directly in the containment sheet 4 and/or 5 enables omitting machining, and at the same time offers the advantages of the geometry of seat S itself, because possible settlements or size modifications of the heat-insulating material are contained or substantially eliminated by the containment sheet.

Of course, the implementation details and the embodiments may vary, even substantially, from what has been described and illustrated in the foregoing, without departing from the scope of the present invention as defined by the appended Claims.

## Claims

1. A thermal insulation panel (1) comprising:
- a first outer wall (2) and a second outer wall (3) arranged spaced from one another to define a thickness (t) of said panel (1) therebetween,
- a first containment sheet (4) and a second containment sheet (5) extending along said thickness (t) between, respectively, a first pair of mutually facing end edges (2A, 3A) and a second pair of mutually facing end edges (2B, 3B) of said first external wall (2) and second external wall (3), said first containment sheet (4) and second containment sheet (5) being arranged at opposite ends of the thermal insulation panel (1) and delimiting with said first external wall (2) and second external wall (3) a thickness compartment (V) of said thermal insulation panel (1),
a thermal insulating layer (6) occupying said thickness compartment (V),
wherein:
- at least one of said first containment sheet (4) and second containment sheet (5) is shaped so as to include one or more housing seats (S) for a respective sealing element (7),
- a sealing element (7) is fixed at the corresponding housing seat (S) and extends along the corresponding containment sheet (5) in a position comprised between the pair of mutually facing end edges (2B, 3B).

2. The thermal insulation panel (1) according to claim 1, wherein the first pair of mutually facing end edges (2A, 3A) and the second pair of mutually facing end edges (2B, 3B) are shaped to define, respectively, a first coupling profile (C1) and a second coupling profile (C2) which can be mutually coupled, in which the coupling profile (C1) defined by the first pair of mutually facing end edges (2A, 3A) is configured for coupling shape with the coupling profile (C2) defined by the second pair of mutually facing end edges (2B, 3B) of a homologous thermal insulation panel (1), the first containment sheet (4) and the second containment sheet (5) being arranged, respectively, within the first coupling profile (C1) and the second coupling profile (C2),

3. The thermo-insulating panel (1) according to claim 1 or claim 2, wherein the housing seat (S) is formed within the heat-insulating layer (6), the surface of said housing seat (S) being coated by the containment sheet (5).

4. The thermal insulation panel (1) according to claim 3, wherein the housing seat (2) is a groove extending along the corresponding containment sheet (5) in a position comprised between the pair of mutually facing end edges (2B, 3B).

5. The thermal insulation panel (1) according to claim 2, wherein each coupling profile (C1, C2) comprises a pair of ribs (R1, R2) extending along the respective mutually facing end edges (2A, 3A; (2B, 3B), each rib (R1, R2) being made by upturning the first external wall (2) and the second external wall (3) towards said thickness compartment (V).

6. The thermal insulation panel (1) according to claim 5, wherein the ribs (R1) of said first coupling profile (C1) comprise a pair of facing surfaces inside said thickness compartment (V) and spaced along said thickness (t) by a first distance (D), and in which the ribs (R2) of said second coupling profile (C2) comprise a pair of surfaces facing outwards of said thickness compartment (V) and spaced along said thickness (t) by a second distance (d), wherein said second distance (d) is equal to or less than said first distance (D).

7. A method for manufacturing a thermal insulation panel (1) according to any of the preceding claims, the method comprising:
- feeding a first flow of sheet material and a second flow of sheet material along a main process direction (X) and in a spaced position in a transverse direction to the main process direction (X), said first flow of sheet material providing said first wall (2) and said second flow of sheet material providing said second wall (3),
- feeding a third flow of sheet material and a fourth flow of sheet material, said third flow of sheet material and fourth flow of sheet material defining said first containment sheet (4) and second containment sheet (5),
- applying said third flow of sheet material and fourth flow of sheet material by means of a first containment device (102) and a second containment device (104) between, respectively, the first pair of mutually facing end edges (2A, 3A) and the second pair of mutually facing end edges (2B, 3B), wherein said applying comprises imparting to at least one of said third flow of sheet material and fourth flow of sheet material a shape corresponding to said housing seat (S) by means of the respective containment device (102, 104),
- supplying a heat-insulating material into said thickness compartment (V) while maintaining the application of said first and second containment elements (102, 104) onto the third flow of sheet material and fourth flow of sheet material, and
- applying a sealing element (7) at said housing seat (S) after supplying the thermal insulation material.

8. The method according to claim 7, further comprising shaping the first pair of mutually facing end edges (2A, 3A) and the second pair of mutually facing end edges (2B, 3B) to define, respectively, the first coupling profile (C1) and the second coupling profile (C2),

9. The method according to claim 7 or claim 8, wherein said first and second containment devices (102, 104) comprise a track carrying a plurality of cleats (106, 108), said cleats (106, 108) being configured to exert a containment action on the corresponding flow of sheet material in a direction transverse to the main process direction (X).

10. The method according to claim 9, wherein the cleats (106, 108) of at least one of said first and second containment devices (102, 104) comprise a surface elevation (110) configured for providing said housing seat (S).
